# FASCICULE DE BREVET EUROPEEN

(11) **EP 3 716 639 B1**
(45) Date de publication et mention de la délivrance du brevet: **20.07.2022**
(21) Numéro de dépôt: 20166157.6
(22) Date de dépôt: 27.03.2020
(51) Int. Cl.: H04Q 9/00, H02J 9/00, G06F 1/30, G06F 1/18, G06F 1/26

(54) **PROCÉDÉS ET SYSTÈMES DE SUPERVISION D'UNE INSTALLATION ÉLECTRIQUE**
VERFAHREN UND SYSTEME ZUR ÜBERWACHUNG EINER ELEKTRISCHEN ANLAGE
METHODS AND SYSTEMS FOR SUPERVISING AN ELECTRICAL INSTALLATION

(30) Priorité: 29.03.2019 FR 1903360
(43) Date de publication de la demande: 30.09.2020
(73) Titulaire: Schneider Electric Industries SAS, 92500 Rueil Malmaison (FR)
(72) Inventeur: TIAN, Simon, 38050 GRENOBLE CEDEX 09 (FR); WANG, Shun Yao, 38050 GRENOBLE CEDEX 09 (FR)
(74) Mandataire: Lavoix

(56) Documents cités:
- CN-A- 102 307 367
- CN-A- 107 507 405
- US-A1- 2007 028 122
- US-A1- 2010 008 218

## Description

La présente invention se rapporte notamment à des procédés et des systèmes pour la gestion d'énergie dans un appareil de communication, notamment pour gérer une perte d'alimentation électrique dans un appareil de communication au sein d'une installation électrique.

Des installations électriques, telles que des installations de distribution d'électricité, comportent généralement un ou plusieurs appareils électriques tels que des appareils de mesure ou de comptage, des appareils de protection électrique, des appareils de commutation, ou des appareils équivalents.

Pour piloter et superviser une telle installation à distance, ces appareils électriques sont généralement capables d'échanger des données avec un serveur informatique distant grâce à une liaison de communication.

En pratique, une liaison de communication peut être établie au moyen d'un ou de plusieurs équipements de communication appropriés montés dans un tableau électrique de l'installation et connectés à au moins une partie des appareils électriques. Ces équipements de communication sont typiquement alimentés électriquement par l'installation électrique elle-même.

Un inconvénient est qu'en cas de perte de l'alimentation électrique, par exemple à cause d'une défaillance de l'installation, la liaison de communication est interrompue, ce qui empêche de superviser et piloter l'installation électrique à distance, notamment pour identifier et corriger le défaut à l'origine de la perte d'alimentation électrique.

Le document CN 107 507 405 A décrit la détermination qu'un routeur est mis hors tension lorsque la tension d'entrée d'alimentation est inférieure à une tension seuil. Un message d'alarme de panne de courant pré-enregistré est envoyé à un terminal distant. Le document US 2007/028122 A1 décrit le fait de désactiver certaines parties d'un composant réseau, qui ne sont pas impliquées dans l'envoi d'un message d'alerte («dying gasp»), pour économiser l'énergie nécessaire à l'envoi du message.

C'est à ces inconvénients qu'entend plus particulièrement remédier l'invention, en proposant des procédés et des systèmes de la gestion d'énergie dans un appareil de communication, notamment pour gérer une perte d'alimentation électrique dans un appareil de communication au sein d'une installation électrique.

A cet effet, des aspects de l'invention concernent un procédé mis en œuvre par un appareil de communication pour une installation électrique tel que défini par la revendication 1 et comportant des étapes consistant à :
détecter une perte d'alimentation électrique de l'appareil de communication ;
puis, lorsqu'une perte d'alimentation est détectée :
   interrompre au moins une partie des fonctions du circuit électronique de traitement, et
   envoyer un message d'alerte à destination d'un équipement distant par une liaison de communication, le message d'alerte étant préalablement stocké dans une mémoire de l'appareil de communication.

Grâce à l'invention, un utilisateur situé à distance peut être informé qu'un défaut d'alimentation est survenu dans l'installation électrique. L'interruption partielle du circuit électronique de traitement permet de conserver l'énergie stockée dans l'appareil pour envoyer le message d'alerte. Comme le message est déjà stocké en mémoire, l'appareil peut l'émettre directement, ce qui est plus rapide et moins consommateur d'énergie que si le circuit devait complètement construire un tel message après la perte d'alimentation.

Selon des aspects avantageux mais non obligatoires, un tel procédé peut incorporer une ou plusieurs des caractéristiques suivantes, prises isolément ou suivant toute combinaison techniquement admissible :
- Postérieurement à la perte d'alimentation, l'appareil de communication est alimenté électriquement temporairement par une réserve d'énergie connectée dans un circuit d'alimentation électrique de l'appareil de communication.
- L'envoi du message d'alerte est répété tant qu'il reste suffisamment d'énergie en réserve pour alimenter l'appareil de communication.
- Le procédé comporte en outre des étapes consistant à :
   - acquérir un message d'alerte préenregistré auprès d'un autre appareil connecté à l'appareil de communication, puis
   - stocker ledit message d'alerte dans une mémoire de l'appareil de communication.
- Le message d'alerte comporte des données d'identification permettant d'identifier l'autre appareil auprès duquel le message a été acquis.
- Le message d'alerte comporte l'adresse de destination de l'équipement distant.
- La détection de perte d'alimentation comporte des étapes consistant à :
   - mesurer une tension électrique entre des bornes d'entrée d'un circuit d'alimentation électrique de l'appareil de communication, au moyen d'une sonde de mesure, et
   - comparer la tension électrique mesurée avec une valeur seuil de tension, une perte d'alimentation étant déterminée comme s'étant produite si la tension mesurée est inférieure à la valeur seuil pendant une durée supérieure à une valeur de durée prédéfinie.
- Aucune perte d'alimentation électrique n'est détectée, l'appareil de communication relaye, sur la liaison de communication, des données reçues depuis au moins un autre appareil auquel il est connecté.
- L'appareil comporte un circuit électronique de traitement programmé pour :
- détecter une perte d'alimentation électrique de l'appareil de communication ;
puis, lorsqu'une perte d'alimentation est détectée :
- interrompre au moins une partie des fonctions de l'appareil de communication, et
- envoyer un message d'alerte à destination d'un équipement distant par une liaison de communication, le message d'alerte étant préalablement stocké dans une mémoire de l'appareil de communication.

Selon un autre aspect, l'appareil de communication est configuré pour être alimenté électriquement temporairement par une réserve d'énergie connectée à un circuit d'alimentation électrique de l'appareil de communication.

Selon un autre aspect avantageux mais non obligatoire, l'installation électrique comporte un appareil de communication tel que décrit précédemment et au moins un autre appareil connecté à l'appareil de communication, dans laquelle l'appareil de communication est programmé pour relayer, sur la liaison de communication, des données reçues depuis ledit au moins un autre appareil tant qu'aucune perte d'alimentation électrique n'est détectée.

L'invention sera mieux comprise et d'autres avantages de celle-ci apparaîtront plus clairement à la lumière de la description qui va suivre d'un mode de réalisation d'un procédé et d'un appareil de communication associé donnée uniquement à titre d'exemple et faite en référence aux dessins annexés, dans lesquels :
[Fig 1] la figure 1 représente schématiquement, selon une vue en perspective, un appareil de communication conforme à des modes de réalisation de l'invention ;
[Fig 2] la figure 2 est un schéma fonctionnel d'un appareil de communication conforme à des modes de réalisation de l'invention ;
[Fig 3] la figure 3 est un schéma fonctionnel d'une installation électrique comportant l'appareil de communication de la figure 2 ;
[Fig 4] la figure 4 est un diagramme de flux d'un procédé de fonctionnement de l'appareil de communication de la figure 2.

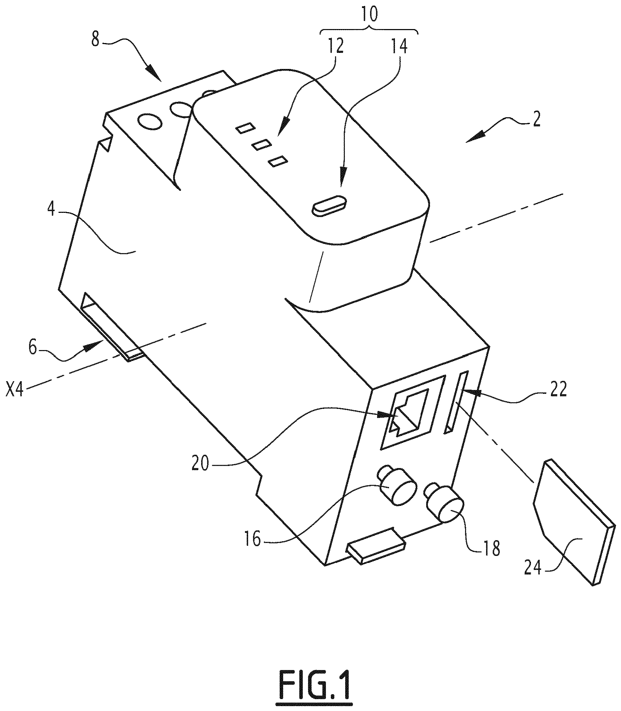

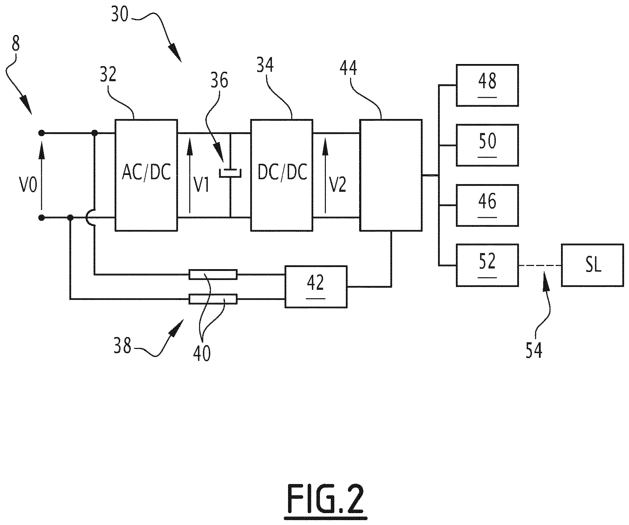

Les figures 1 et 2 décrivent un appareil de communication 2.

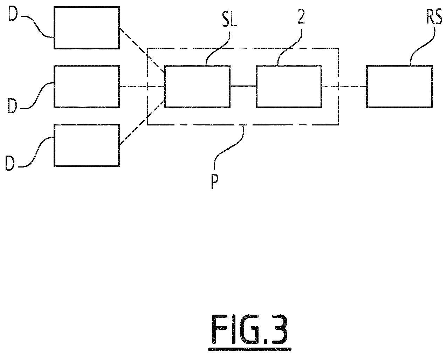

Selon des modes de réalisation, comme illustré sur la figure 3, l'appareil 2 est associé à un ou plusieurs appareils électriques dans une installation électrique, telle qu'une installation de distribution d'électricité.

Par exemple, les appareils électriques, désignés par la référence D, sont des appareils de protection électrique, tels que des disjoncteurs.

Selon des variantes, les appareils électriques D peuvent aussi être des appareils de commutation électrique, tels que des interrupteurs, ou des relais, ou des contacteurs, ou des sectionneurs. Il peut aussi s'agir d'appareils de comptage ou de mesure, par exemple pour mesurer des grandeurs électriques dans l'installation, ou de capteurs, ou de contrôleurs logiques programmables, ou tout autre appareil analogue.

Les appareils électriques D peuvent, par exemple, être montés sur un ou plusieurs tableaux électriques, ou être disséminés dans un ou plusieurs bâtiments associés à l'installation électrique.

Préférentiellement, les appareils électriques D sont capables d'échanger des données avec un équipement distant RS, tel qu'un serveur informatique distant, par exemple accessible au travers du réseau internet ou d'un réseau informatique privé.

Selon des modes de réalisation, les appareils électriques D sont connectés indirectement au serveur distant RS par l'intermédiaire d'un équipement de communication, tel qu'une passerelle, auquel les appareils électriques D sont connectés. Cet équipement porte la référence SL et est nommé « concentrateur de données » dans ce qui suit.

Par exemple, les appareils D sont connectés au concentrateur SL chacun au moyen d'une liaison de communication sans fil de courte portée, telle qu'une liaison Bluetooth^{®}, ou une liaison Zigbee^{®}, ou équivalent. A cet effet, chaque appareil D comprend une interface de communication appropriée incluant notamment un circuit électronique de traitement et un émetteur-récepteur radio.

Le concentrateur SL est par exemple programmé pour collecter des données provenant des appareils D auxquels il est connecté en vue d'un envoi de ces données vers le serveur distant RS. Le concentrateur de données SL peut également envoyer des données reçues depuis le serveur distant RS vers un ou plusieurs des appareils D.

Dans cet exemple, le concentrateur SL et l'appareil de communication 2 sont montés sur un tableau électrique P de l'installation électrique.

Selon des modes de réalisation, la connexion au serveur distant SR est réalisée grâce à une liaison de communication de longue portée par l'intermédiaire de l'appareil de communication 2. Par exemple, le concentrateur de données SL est connecté à l'appareil 2 par une liaison filaire, telle qu'une liaison Ethernet.

Ainsi, l'appareil de communication 2 peut être programmé pour relayer vers le serveur distant RS les données émises par les appareils D qui lui sont transmises par le concentrateur de données SL.

La liaison de communication de longue portée est par exemple une liaison sans fil, telle qu'une liaison WiFi, ou une liaison 3G, 4G, 5G, LPWA, NB-loT ou équivalent.

Bien entendu, d'autres configurations peuvent être envisagées.

Des exemples de l'appareil 2 sont maintenant décrits en référence aux figures 1 et 2.

L'appareil 2 comporte un boîtier 4, par exemple en plastique moulé. Par exemple, le boîtier 4 présente sensiblement une forme de pavé.

De préférence, un système de fixation 6 est associé ou intégré au boîtier 4 pour faciliter le montage de l'appareil 2 dans le tableau électrique P. Le système 6 est par exemple formé sur une face arrière du boîtier 4.

Par exemple, l'appareil 2 est apte à être monté sur un rail de fixation tel qu'un rail DIN, représenté schématiquement par l'axe X4 sur la figure 1.

Le système de fixation 6 peut notamment comporter un crochet déformable, par exemple formé d'un seul tenant avec le boîtier 4, ou tout autre mécanisme approprié.

L'appareil 2 comporte des bornes de raccordement 8, ici placées sur une face supérieure du boîtier 4, qui permettent de connecter l'appareil 2 à une source d'alimentation électrique.

Selon des modes de réalisation, l'appareil 2 comporte une interface utilisateur 10, ici placée sur une face avant du boîtier 4, et qui comprend par exemple un ou plusieurs indicateurs lumineux 12 et un ou plusieurs organes d'actionnement 14 tel qu'un bouton poussoir ou un interrupteur.

De préférence, l'appareil 2 comprend un ou plusieurs connecteurs radio 16, 18 chacun apte à être connecté à une antenne radiofréquence extérieure au boîtier au moyen d'un câble.

L'appareil 2 comprend également un connecteur de données 20 pour de connecter l'appareil 2 à une liaison filaire de communication. Le connecteur 20 est par exemple un connecteur RJ-45.

Selon des variantes, l'appareil 2 peut comporter un logement 22 destiné à recevoir un support amovible 24 de stockage de données lisibles par machine, tel qu'une carte mémoire ou une carte SIM (Subscriber Identity Module). Le logement 22 peut être accessible par une fente formée sur une face extérieure du boîtier 4.

Comme illustré par la figure 2, l'appareil 2 comporte un circuit électrique d'alimentation 30 comprenant un convertisseur de puissance 32 alternatif-continu (AC/DC) et un convertisseur de puissance 34 continu-continu (DC/DC).

Par exemple, le convertisseur 34 est un abaisseur de tension (« buck converter » en anglais).

L'entrée du convertisseur 32 est connectée aux bornes d'alimentation 8. La sortie du convertisseur 32 est connectée à l'entrée du convertisseur 34. La sortie du convertisseur 34 est connectée à un rail d'alimentation pour alimenter électriquement les constituants de l'appareil 2.

La référence « V0 » désigne une tension électrique alternative appliquée entre les bornes 8 pour alimenter l'appareil 2. La référence « V1 » désigne la tension électrique continue en sortie du convertisseur 32. La référence « V2 » désigne la tension électrique continue en sortie du convertisseur 34.

Une réserve d'énergie 36, telle qu'un condensateur, est connectée dans le circuit 30, par exemple en parallèle entre la sortie du convertisseur 32 et l'entrée du convertisseur 34.

Par exemple, la capacité du condensateur 36 est supérieure ou égale à 2µF ou supérieure ou égale à 2,5µF ou encore supérieure ou égale à 5µF.

L'appareil 2 est utilisable dans un réseau électrique monophasé. Toutefois, selon des variantes non illustrées, l'appareil 2 peut être modifié pour fonctionner dans un réseau électrique polyphasé, tel qu'un réseau triphasé avec ligne de neutre ou un réseau triphasé sans ligne de neutre.

L'appareil 2 comporte également une sonde de mesure 38 pour mesurer la tension électrique V0 entre les bornes 8 en entrée du circuit d'alimentation 30.

Par exemple, la sonde 38 comporte une ou plusieurs résistances 40 et un circuit de traitement électronique 42 comportant par exemple un convertisseur analogiquenumérique. En variante, la sonde 38 pourrait comporter un capteur de tension de technologie différente, tel qu'un capteur capacitif.

L'appareil 2 comporte également une unité électronique de commande 44, comportant par exemple un circuit électronique incluant un microprocesseur ou un microcontrôleur et une mémoire informatique.

Dans un mode de réalisation, un ou plusieurs procédés de fonctionnement conformes à des aspects de l'invention sont mis en œuvre par l'unité électronique de commande 44 grâce à des instructions exécutables enregistrées sur un support d'enregistrement lisible par ordinateur, tel que la mémoire informatique de l'unité électronique de commande 44.

En variante, l'unité électronique de commande 44 comporte un composant logique programmable (Field Programmable Gâte Array) ou un circuit intégré spécialisé (Application-Specific Integrated Circuit) ou un ensemble de composants électroniques discrets.

La sonde de mesure 38 est connectée à une entrée de données de l'unité électronique de commande 44.

L'appareil 2 comporte également une connexion 46 à interface utilisateur 10 ainsi qu'une ou plusieurs interfaces de communication pour établir la liaison de communication de longue portée précédemment décrite.

Dans l'exemple illustré, lesdites interfaces de communication une interface 48 de communication par internet sans fil de type WiFi, et une interface 50 de communication par téléphonie cellulaire, par exemple de type 3G ou 4G ou 5G, ainsi qu'une interface de communication Ethernet 52 pour permettre la connexion au concentrateur SL par l'intermédiaire d'une liaison filaire 54.

Lesdites interfaces de communication sont raccordées aux connecteurs radio 16, 18 et au connecteur de données 20 précédemment décrits.

En pratique, on comprend que l'appareil 2 peut servir de module de communication sans fil, tel qu'un module 4G, qui peut être ajouté à l'installation électrique pour lui permettre de communiquer avec l'équipement distant RS par l'intermédiaire d'une liaison sans fil à longue portée lorsqu'aucun des autres appareils de l'installation n'est capable d'établir une telle liaison sans fil.

Selon des aspects de l'invention, l'unité de commande 44 est programmée pour envoyer un message d'alerte à destination de l'équipement distant RS en cas de défaillance de l'alimentation électrique.

De préférence, le message d'alerte est envoyé sur une des liaisons de communication radio à longue portée, par exemple par la liaison de téléphonie 4G.

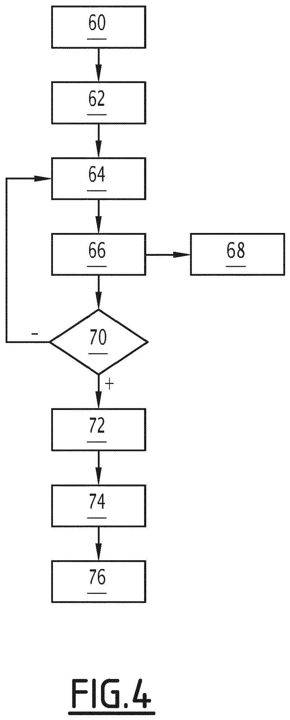

Un exemple d'un procédé de fonctionnement de l'appareil 2 est maintenant décrit en référence à la figure 4.

Le procédé démarre à l'étape 60, par exemple avec la mise sous tension électrique de l'appareil de communication 2.

Dans certains modes de réalisation, suite au démarrage, lors d'une étape 62, l'appareil 2 acquiert le contenu du message d'alerte préenregistré auprès d'un autre appareil, par exemple auprès du concentrateur SL, et stocke ce message en mémoire, par exemple dans la mémoire de l'unité électronique de commande 44.

Dans d'autres modes de réalisation, le contenu du message peut être préenregistré en mémoire de l'appareil 2 par d'autres moyens.

Par exemple, le message comporte un corps et un en-tête.

L'en-tête peut comporter des données d'adressage pour assurer la distribution du message.

Le corps du message peut contenir un code d'erreur présentant une valeur prédéfinie, représentative d'une condition d'erreur associée à la perte d'alimentation électrique.

Le message peut se présenter sous la forme d'une trame.

Dans cette description, le terme « message » se réfère à la fois au contenu du message tel qu'il peut résider sous la forme d'un ensemble de données numériques, et du message d'alerte lui-même lorsqu'il est envoyé par l'appareil 2 sous la forme d'un message radiofréquence.

De préférence, le message d'alerte acquis comporte des données d'identification identifiant l'autre appareil auprès duquel le message d'alerte a été acquis. Par exemple, les données d'identification peuvent figurer dans l'en-tête du message d'alerte. Dans cet exemple, l'autre appareil est le concentrateur SL.

Selon des exemples, les données d'identification peuvent comporter un numéro de série de l'autre appareil, ou une adresse réseau de l'autre appareil, ou tout autre donnée ou identifiant approprié permettant de distinguer l'autre appareil au sein de l'installation.

Avantageusement, le message d'alerte comporte également l'adresse de destination de l'équipement distant RS. Par exemple, l'adresse de destination de l'équipement distant RS peut figurer dans un en-tête du message d'alerte.

Lors d'une étape 64, la tension V0 est mesurée par la sonde de mesure 38, afin de vérifier si l'appareil 2 est alimenté électriquement par l'installation électrique.

Tant que l'appareil 2 est toujours correctement alimenté, et donc qu'aucune perte d'alimentation électrique n'est détectée, l'appareil 2 fonctionne normalement, comme illustré par l'étape 66 de la figure 4.

Selon des exemples, pendant cette phase de fonctionnement normal, l'appareil 2 relaye automatiquement, sur la liaison de communication, des données reçues depuis au moins un autre appareil auquel il est connecté.

Par exemple, au cours de leur fonctionnement, un ou plusieurs des appareils D génèrent des données qui sont destinées à être envoyées vers l'équipement distant RS.

Lesdites données sont, par exemple, des données relatives à des mesures électriques, à des états internes d'un ou plusieurs appareils D ou d'un ou plusieurs composants de l'installation électrique.

Pour ce faire, le ou les appareils D envoient automatiquement lesdites données vers le concentrateur SL. Le concentrateur SL relaye automatiquement ces données vers l'appareil 2 par l'intermédiaire de la liaison filaire 54.

Ainsi, pendant cette phase de fonctionnement normal, comme illustré par l'étape 68 de la figure 4, l'appareil 2 reçoit les données envoyées par le concentrateur SL et les relaie automatiquement vers le serveur distant RS par l'intermédiaire de la liaison longue portée.

En parallèle, lors d'une étape 70, l'unité de commande 44 compare automatiquement la tension électrique mesurée avec une valeur seuil de tension pour détecter si une perte d'alimentation s'est produite.

Selon des modes de réalisation, une perte d'alimentation est déterminée comme s'étant produite si la tension mesurée est inférieure à la valeur seuil pendant une durée supérieure à une valeur de durée prédéfinie.

Par exemple, la valeur de durée prédéfinie et la valeur seuil de tension sont prédéfinies par un utilisateur ou préréglées en usine.

Selon un exemple donné à titre d'illustration, la valeur seuil de tension est choisie égale à 0,2 fois la valeur de la tension nominale d'alimentation. La durée prédéfinie est choisie supérieure ou égale à 10 millisecondes (ms) ou supérieure ou égale à 20 ms.

Si aucune perte d'alimentation n'est détectée, alors l'appareil 2 continue à fonctionner normalement, comme expliqué ci-dessus. Par exemple, le procédé retourne à l'étape 64.

Les étapes 64 et 70 de mesure et de comparaison sont réitérées par la suite, de façon récurrente, par exemple avec une périodicité prédéfinie ou à des intervalles de temps réguliers.

Au contraire, si une perte d'alimentation est détectée à l'issue de l'étape 70, alors, durant une étape 72, l'unité de commande 44 interrompt automatiquement au moins une partie des fonctions de l'appareil 2.

Par exemple, des fonctions non essentielles de l'appareil 2 et/ou de l'unité de commande 44 sont temporairement désactivées, afin de réduire la consommation d'énergie de l'appareil 2.

En effet, postérieurement à la perte d'alimentation, l'appareil 2 est alimenté électriquement temporairement par le condensateur 36.

En pratique, l'appareil 2 est dépourvu de batterie, car l'utilisation d'une batterie renchérirait le coût de production de l'appareil, et augmenterait les dimensions de l'appareil 2.

De préférence, les fonctions relatives à l'envoi du message d'alerte sont considérées comme essentielles et ne sont pas désactivées.

En particulier, l'appareil de communication 2 cesse de relayer les données reçues depuis ledit au moins un autre appareil, tel que le concentrateur SL.

Selon des modes de réalisation, d'autres fonctions non essentielles qui sont temporairement désactivées peuvent comporter la mesure de la tension avec la sonde 38, ou la gestion de la réception des données provenant du concentrateur SL, ou bien la gestion de l'interface utilisateur 10, et bien d'autres fonctions encore.

Puis, lors d'une étape 74, l'unité de commande 44 envoie automatiquement le message d'alerte à destination de l'équipement distant RS par la liaison de communication, en utilisant l'interface de communication appropriée.

Plus précisément, le message d'alerte qui est envoyé est le message d'alerte préalablement stocké dans une mémoire de l'appareil de communication.

De cette manière, l'unité de commande 44 n'a pas besoin de perdre du temps à générer et construire un message d'alerte. Au lieu de cela, l'unité de commande 44 envoie directement le message d'alerte dont elle dispose déjà en mémoire, ce qui permet de réduire la durée entre la détection de perte d'alimentation et l'envoi du message. Cela réduit le risque que la réserve d'énergie 36 soit vide avant que le message d'alerte n'ait eu le temps d'être envoyé.

Ceci est d'autant plus avantageux que le message d'alerte préenregistré contient déjà l'adresse de destination de l'équipement distant RS.

Encore plus avantageusement, si le message préenregistré contient en outre des données d'identification associées à l'autre appareil, par exemple associées à la passerelle SL, alors l'équipement distant sera, dès réception du message d'alerte, en mesure de savoir quelle partie de l'installation électrique n'est plus en mesure d'échanger des données par la liaison de communication.

Selon des modes de réalisation avantageux, l'envoi du message d'alerte est répété (étape 76) tant qu'il reste suffisamment d'énergie en réserve pour alimenter l'appareil de communication 2.

Ainsi, en envoyant plusieurs fois le message, la probabilité que le message soit correctement reçu par l'équipement distant RS se trouve augmentée.

En pratique, la réserve d'énergie 36 est dimensionnée pour que l'appareil 2 puisse répéter l'envoi du message d'alerte au moins 3 fois ou 4 fois.

Les modes de réalisation et les variantes envisagés ci-dessus peuvent être combinés entre eux pour donner naissance à de nouveaux modes de réalisation.

## Revendications

1. Procédé mis en œuvre par un appareil de communication (2) pour une installation électrique, ladite installation comportant un ou plusieurs appareils électriques (D) et une passerelle (SL), l'appareil de communication (2) étant connecté à la passerelle (SL), l'appareil de communication (2) étant en outre connecté à un équipement distant (RS) par une liaison de communication, le procédé comportant des étapes consistant à :
au démarrage de l'appareil de communication (2) :
- acquérir (62) un message d'alerte préenregistré auprès de la passerelle (SL), le message d'alerte comportant des données d'identification permettant d'identifier la passerelle (SL) auprès duquel le message a été acquis, puis
- stocker ledit message d'alerte dans une mémoire de l'appareil de communication,
puis :
- détecter (70) une perte d'alimentation électrique de l'appareil de communication (2) ;
puis, lorsqu'une perte d'alimentation est détectée :
- interrompre (72) au moins une partie des fonctions de l'appareil de communication (2), et
- envoyer (74) le message d'alerte préalablement stocké en mémoire à destination de l'équipement distant (RS) par la liaison de communication.

2. Procédé selon la revendication 1, dans lequel, postérieurement à la perte d'alimentation, l'appareil de communication (2) est alimenté électriquement temporairement par une réserve d'énergie (36) connectée dans un circuit d'alimentation électrique de l'appareil de communication (2).

3. Procédé selon l'une quelconque des revendications précédentes, dans lequel l'envoi du message d'alerte est répété (76) tant qu'il reste suffisamment d'énergie en réserve pour alimenter l'appareil de communication (2).

4. Procédé selon l'une quelconque des revendications précédentes, dans lequel le message d'alerte comporte l'adresse de destination de l'équipement distant (RS).

5. Procédé selon l'une quelconque des revendications précédentes, dans lequel la détection de perte d'alimentation comporte des étapes consistant à :
- mesurer (64) une tension électrique (V0) entre des bornes d'entrée d'un circuit d'alimentation électrique de l'appareil de communication, au moyen d'une sonde de mesure (38), et
- comparer (70) la tension électrique mesurée avec une valeur seuil de tension, une perte d'alimentation étant déterminée comme s'étant produite si la tension mesurée est inférieure à la valeur seuil pendant une durée supérieure à une valeur de durée prédéfinie.

6. Procédé selon l'une quelconque des revendications précédentes, dans lequel tant qu'aucune perte d'alimentation électrique n'est détectée, l'appareil de communication (2) relaye (66, 68), sur la liaison de communication, des données reçues depuis au moins un autre appareil (SL) auquel il est connecté.

7. Appareil de communication (2) pour une installation électrique, ladite installation comportant un ou plusieurs appareils électriques (D) et une passerelle (SL), l'appareil de communication (2) étant apte à être connecté à la passerelle (SL), l'appareil de communication (2) étant en outre apte à être connecté à un équipement distant (RS) par une liaison de communication, l'appareil (2) comportant un circuit électronique de traitement (44) programmé pour :
au démarrage de l'appareil de communication (2) :
- acquérir (62) un message d'alerte préenregistré auprès de la passerelle (SL), le message d'alerte comportant des données d'identification permettant d'identifier la passerelle (SL) auprès duquel le message a été acquis, puis
- stocker ledit message d'alerte dans une mémoire de l'appareil de communication,
puis :
- détecter (70) une perte d'alimentation électrique de l'appareil de communication (2) ;
puis, lorsqu'une perte d'alimentation est détectée :
- interrompre (72) au moins une partie des fonctions de l'appareil de communication (2), et
- envoyer (74) le message d'alerte préalablement stocké en mémoire à destination de l'équipement distant (RS) par la liaison de communication.

8. Appareil de communication (2) selon la revendication 9, dans lequel l'appareil de communication (2) est configuré pour être alimenté électriquement temporairement par une réserve d'énergie (36) connectée à un circuit d'alimentation électrique (30) de l'appareil de communication (2).

9. Installation électrique comportant un appareil de communication (2) conforme la revendication 7 ou 8 et au moins un autre appareil (SL) connecté à l'appareil de communication, dans laquelle l'appareil de communication (2) est programmé pour relayer (66, 68), sur la liaison de communication, des données reçues depuis ledit au moins un autre appareil tant qu'aucune perte d'alimentation électrique n'est détectée.

## Patentansprüche

1. Verfahren, das von einem Kommunikationsgerät (2) für eine elektrische Anlage durchgeführt wird, die Anlage umfassend ein oder mehrere elektrische Geräte (D) und ein Gateway (SL) umfasst, wobei das Kommunikationsgerät (2) mit dem Gateway (SL) verbunden ist, wobei das Kommunikationsgerät (2) ferner über eine Kommunikationsverbindung mit einer entfernten Ausrüstung (RS) verbunden ist, das Verfahren umfassend Schritte, die aus Folgendem bestehen:
bei Start des Kommunikationsgeräts (2):
- Erfassen (62) einer vorab aufgezeichneten Warnmeldung bei dem Gateway (SL), die Warnmeldung umfassend Identifikationsdaten, die es ermöglichen, das Gateway (SL) zu identifizieren, bei dem die Meldung erfasst wurde, dann
- Speichern der Warnmeldung in einem Speicher des Kommunikationsgeräts,
dann:
- Feststellen (70) eines Stromversorgungsausfalls des Kommunikationsgeräts (2);
dann, wenn ein Stromausfall festgestellt wird:
- Unterbrechen (72) mindestens eines Teils der Funktionen des Kommunikationsgeräts (2), und
- Senden (74) der vorab in dem Speicher gespeicherten Warnmeldung an die entfernte Ausrüstung (RS) über die Kommunikationsverbindung.

2. Verfahren nach Anspruch 1, wobei das Kommunikationsgerät (2) nach dem Stromausfall vorübergehend elektrisch von einer Energiereserve (36) versorgt wird, die in einen Stromversorgungskreis des Kommunikationsgeräts (2) geschaltet ist.

3. Verfahren nach einem der vorherigen Ansprüche, wobei das Senden der Warnmeldung wiederholt wird (76), solange noch genügend Energie in Reserve ist, um das Kommunikationsgerät (2) zu versorgen.

4. Verfahren nach einem der vorherigen Ansprüche, wobei die Warnmeldung die Zieladresse der entfernten Ausrüstung (RS) umfasst.

5. Verfahren nach einem der vorherigen Ansprüche, wobei das Feststellen des Versorgungsausfalls Schritte umfasst, die aus Folgendem bestehen:
- Messen (64) einer elektrischen Spannung (VO) zwischen Eingangsanschlüssen einer Stromversorgungsschaltung des Kommunikationsgeräts mittels einer Messsonde (38), und
- Vergleichen (70) der gemessenen elektrischen Spannung mit einem Spannungsschwellenwert, wobei bestimmt wird, dass ein Versorgungsausfall aufgetreten ist, wenn die gemessene Spannung über eine Zeitdauer, die größer ist als ein vordefinierter Zeitdauerwert, unter dem Schwellenwert ist.

6. Verfahren nach einem der vorherigen Ansprüche, wobei, solange kein Stromversorgungsausfall festgestellt wird, das Kommunikationsgerät (2) Daten, die von mindestens einem anderen Gerät (SL), mit dem es verbunden ist, empfangen werden, über die Kommunikationsverbindung weiterleitet (66, 68).

7. Kommunikationsgerät (2) für eine elektrische Anlage, die Anlage umfassend ein oder mehrere elektrische Geräte (D) und ein Gateway (SL), wobei das Kommunikationsgerät (2) geeignet ist, um mit dem Gateway (SL) verbunden zu werden, wobei das Kommunikationsgerät (2) ferner geeignet ist, um über eine Kommunikationsverbindung mit einer entfernten Ausrüstung (RS) verbunden zu werden, das Gerät (2) umfassend eine elektronische Verarbeitungsschaltung (44) umfasst, die zu Folgendem programmiert ist:
bei Start des Kommunikationsgeräts (2):
- Erfassen (62) einer vorab aufgezeichneten Warnmeldung bei dem Gateway (SL), die Warnmeldung umfassend Identifikationsdaten, die es ermöglichen, das Gateway (SL) zu identifizieren, bei dem die Meldung erfasst wurde, dann
- Speichern der Warnmeldung in einem Speicher des Kommunikationsgeräts,
dann:
- Feststellen (70) eines Stromversorgungsausfalls des Kommunikationsgeräts (2);
dann, wenn ein Stromausfall festgestellt wird:
- Unterbrechen (72) mindestens eines Teils der Funktionen des Kommunikationsgeräts (2), und
- Senden (74) der vorab in dem Speicher gespeicherten Warnmeldung an die entfernte Ausrüstung (RS) über die Kommunikationsverbindung.

8. Kommunikationsgerät (2) nach Anspruch 9, wobei das Kommunikationsgerät (2) konfiguriert ist, um vorübergehend elektrisch von einer Energiereserve (36) versorgt zu werden, die mit einer Stromversorgungsschaltung (30) des Kommunikationsgeräts (2) verbunden ist.

9. Elektrische Anlage, umfassend ein Kommunikationsgerät (2) nach Anspruch 7 oder 8 und mindestens ein weiteres Gerät (SL), das mit dem Kommunikationsgerät verbunden ist, wobei das Kommunikationsgerät (2) programmiert ist, um Daten, die von dem mindestens einen weiteren Gerät empfangen werden, über die Kommunikationsverbindung weiterzuleiten (66, 68), solange kein Stromversorgungsausfall festgestellt wird.

## Claims

1. A method implemented by a communication device (2) for an electrical installation, said installation comprising one or more electrical devices (D) and a gateway (SL), the communication device (2) being connected to the gateway (SL), the communication device (2) being further connected to a remote equipment (RS) by a communication link, the method comprising steps of:
when the communication device (2) is started:
- acquiring (62) a pre-recorded alert message from the gateway (SL), the alert message comprising identification data to identify the gateway (SL) from which the message was acquired, then
- storing said alert message in a memory of the communication device,
then:
- detecting (70) a loss of power to the communication device (2);
then, when a loss of power is detected:
- interrupting (72) at least some of the functions of the communication device (2), and
- sending (74) the alert message previously stored in memory to the remote equipment (RS) via the communication link.

2. The method according to claim 1, wherein, subsequent to the loss of power, the communication device (2) is temporarily powered electrically by a power reserve (36) connected in a power supply circuit of the communication device (2).

3. The method according to any one of the preceding claims, wherein the sending of the alert message is repeated (76) as long as there is sufficient power in reserve to power the communication device (2).

4. The method according to any of the preceding claims, wherein the alert message comprises the destination address of the remote equipment (RS).

5. The method according to any one of the preceding claims, wherein detecting a loss of power comprises the steps of:
- measuring (64) an electrical voltage (VO) between input terminals of a power supply circuit of the communication device by means of a measurement probe (38), and
- comparing (70) the measured electrical voltage with a voltage threshold value, a loss of power being determined to have occurred if the measured voltage is below the threshold value for a period of time greater than a predefined time value.

6. The method according to any one of the preceding claims, wherein as long as no loss of power supply is detected, the communication device (2) relays (66, 68), over the communication link, data received from at least one other device (SL) to which it is connected.

7. A communication device (2) for an electrical installation, said installation comprising one or more electrical devices (D) and a gateway (SL), the communication device (2) being adapted to be connected to the gateway (SL), the communication device (2) being further adapted to be connected to remote equipment (RS) by a communication link, the device (2) comprising an electronic processing circuit (44) programmed to:
when the communication device (2) is started:
- acquiring (62) a pre-recorded alert message from the gateway (SL), the alert message comprising identification data to identify the gateway (SL) from which the message was acquired, then
- storing said alert message in a memory of the communication device,
then:
- detecting (70) a loss of power to the communication device (2);
then, when a loss of power is detected:
- interrupting (72) at least some of the functions of the communication device (2), and
- sending (74) the alert message previously stored in memory to the remote equipment (RS) via the communication link.

8. The communication device (2) according to claim 9, wherein the communication device (2) is configured to be temporarily powered electrically by a power reserve (36) connected to a power supply circuit (30) of the communication device (2).

9. An electrical installation comprising a communication device (2) in accordance with claim 7 or 8 and at least one other device (SL) connected to the communication device, wherein the communication device (2) is programmed to relay (66, 68), over the communication link, data received from the at least one other device as long as no loss of power is detected.
